# EUROPEAN PATENT SPECIFICATION

(11) **EP 2 921 318 B1**
(45) Date of publication and mention of the grant of the patent: **07.09.2016**
(21) Application number: 14160471.0
(22) Date of filing: 18.03.2014
(51) Int. Cl.: B44C 3/02, B32B 7/00, B44C 5/04

(54) **Panel**
Paneel
Panneau

(43) Date of publication of application: 23.09.2015
(73) Proprietor: RIVA LAMINATI PLASTICI di Giuseppe Riva, 20092 Cinisello Balsamo (Milan) (IT)
(72) Inventor: Riva, Mauro, I-20358 Muggio' (Monza Brianza) (IT)
(74) Representative: Lunati & Mazzoni S.r.L.

(56) References cited:
- DE-A1-102004 055 416
- FR-A1- 2 700 500
- US-A- 4 131 705
- US-A1- 2006 010 802
- US-A1- 2006 087 058

## Description

The present invention relates to a panel of the type as recited in the preamble of the first claim.

In detail, the invention relates to a particular decorative sheet suitable for using for example, for furnishing interiors and/or exteriors, for decorating and making panels for facades/walls, or even for flat surfaces such as tables and shelves and so forth. Similar panels, according to the preamble of claim 1, are described in patent application FR-A-2700500. As known, currently, the laminate panel is composed of a series of sheets impregnated with heat-setting resins. In particular, a laminate provides for a superficial decorative sheet superposed over one or more sheets of Kraft paper, that is to say highly resistant and tough paper, made using long fibre cellulose with soda or sulphate.

To join the sheets, the laminate is subjected to a heat lamination process in which the sheets are superposed, heated and reciprocally pressed so as to melt and polymerise the heat-setting resins joining the sheets composing the laminate panel.

The prior art described above has several significant drawbacks.

A first significant drawback is represented by the fact that the laminate panels thus produced have a rigid, non-thermoformable structure and thus cannot be adapted to the specific shapes of the walls or surfaces to be covered.

Another drawback is the limited possibility of use of known laminates.

Such drawback is determined by the fact that the prior laminates prevent the passage of light and thus cannot be used to make translucid, transparent panels, doors or the like.

A further drawback is the fact that the known decorative laminates are heavy and thus difficult to move and handle.

In this situation the technical purpose of the present invention is to devise a panel able to substantially overcome the drawbacks mentioned above. Another important aim of the invention is to make a panel which is utilisable to make translucid, transparent panels or the like.

A further purpose of the invention is to obtain a laminate panel which easy to transport and handle.

A further purpose of the invention is to devise a panel which is lightweight, flexible, translucid and at the same time has optimal surface characteristics. The technical purpose and specified aims are achieved by a panel as claimed in the appended claim 1.

Preferred embodiments are described in the dependent claims.

The characteristics and advantages of the invention are clearly evident from the following detailed description of a preferred embodiment thereof, with reference to the accompanying drawings, in which:
**Fig. 1** shows a panel according to the invention; and
**Fig. 2** shows another example of panel according to the invention.

With reference to said drawings, reference numeral **1** globally denotes the panel according to the invention.

It is suitable to be used to cover and/or decorate interior or exterior walls, furniture doors, decorative panels, shelving or other furnishing elements or even flat surfaces such as tables or shelves and so forth.

The laminate panel 1 comprises a surface layer **2** defining the visible surface **1a** of the laminate 1; a lower surface **3** integrally constrained to the surface layer 2 on the opposite side to the visible surface 1 a.

In some cases, the panel 1 also comprises an additional surface layer **4** suitable to be constrained to the lower layer 3 on the opposite side to the surface layer 2 and defining, for the laminate 1, an additional visible surface **1 b** substantially parallel to the surface 1 a.

The surface layer 2 comprises at least one decorative substrate **2a** defining the aesthetics of the visible surface 1a and made, for example, in material chosen from among wood, aluminium, textile.

The layer 2 is a HPL (High Pressure Laminate).

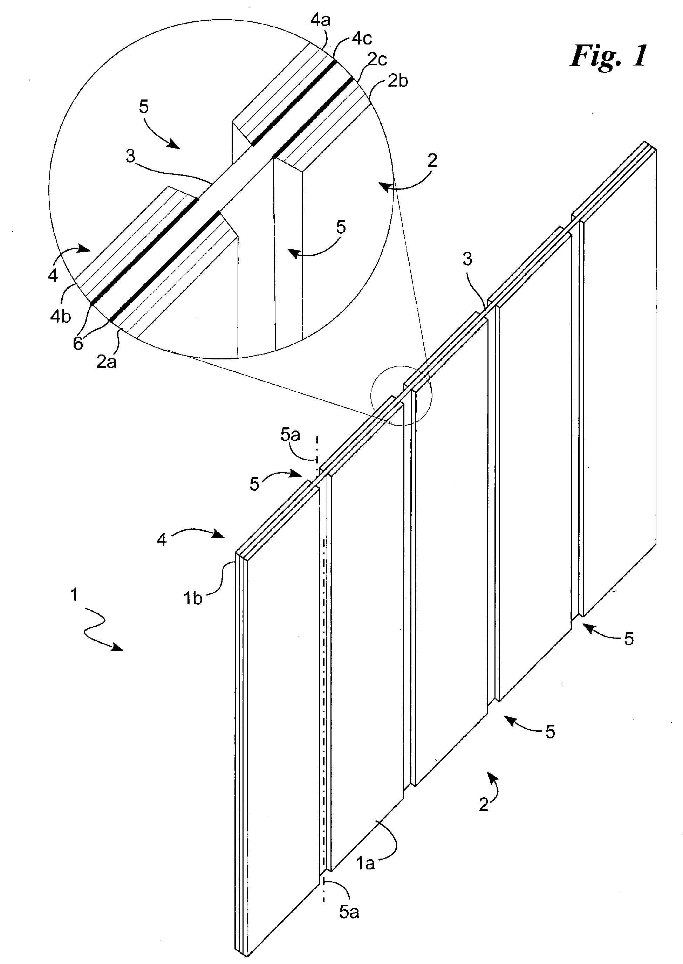

Consequently, as illustrated in the enlargement in Fig. 1, it comprises, in addition to the substrate 2a, a covering substrate **2b** of the decorative layer 2a in highly resistant material so as to protect the substrate 2a from external agents; one or more structural substrates **2c** under the decorative layer 2a and connected to each other and to the substrate 2a with heat-setting resins (such as phenolic, acrylic and melamine resins) having, appropriately impregnation values substantially between 25% and 90% of resin in weight.

The structural substrates 2c are in paper material and preferably in Kraft paper impregnated with resin, as used in the HPL type laminates.

The additional surface layer 4 is practically the same as the surface layer 2 and comprises an additional decorative substrate **4a** defining the additional visible surface 1 b.

Preferably, the additional surface layer 4 is a pressure laminate, preferably in HPL and comprises, as well as the substrate 4a, an additional covering substrate **4b** of the additional decorative layer 4a; one or more additional structural substrates **4c** the same as those of the surface layer 2.

The layers 2 and 4 lastly have a thickness substantially less than 30 mm and in particular substantially between 0.5 and 20 mm.

Between the surface layers 2 and 4 the laminate panel 1 has a lower layer 3.

The lower layer 3 is in a non-opaque polymer material, that is to say a transparent polymer material, suitable to permit the passage of light without it being dissipated or diffused, or in a translucid polymer material, suitable to permit the light to pass through it in a diffused manner. It may be colourless or coloured. Appropriately the lower layer 3 is made of polymer material chosen from among acrylics (preferably metacrylate or PMMA) polycarbonate or polystyrene.

They have a thickness substantially less than 50 mm and in particular substantially between 2 mm and 30 mm.

In an advantageous and innovative manner, the laminate panel 1 has one or more grooves **5** of at least one surface layer 2 having a thickness, calculated substantially perpendicular to the visible surface 1a, equal to that of the layer 2 so as to make the lower layer 3 visible through the surface 1 a.

In particular, the laminate panel 1 comprises grooves 5 preferably made on both surface layers 2 and 4 able to make the lower layer 3 visible through both surfaces 1 a and 1b and, preferably, made in a specular manner in relation to the lower layer 3 so as to prove substantially superposed to each other (Fig. 1). The grooves 5 are preferably trapezoidal (Fig. 1).

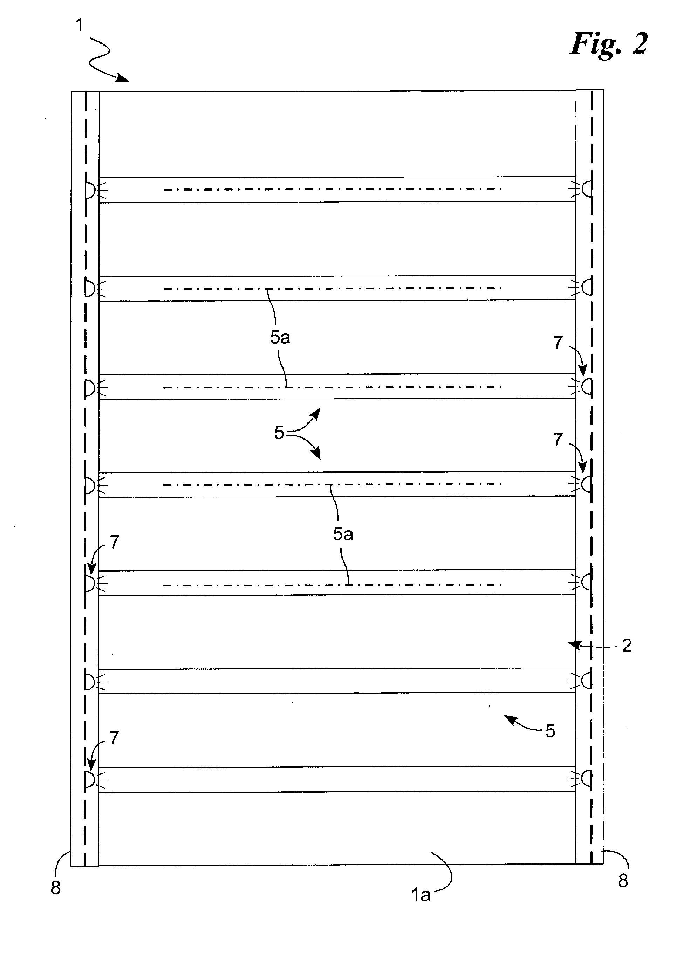

The grooves 5 define, as shown in Figures 1 and 2, lines with preferred extension axes **5a** substantially parallel to each other, and in particular, rectilinear. Moreover, they have an extension equal to the length, calculated along said axes 5a, of the layers 2 and 4 such as to divide the layers 2 and 4 into separate pieces connected only by the lower layer 3.

Alternatively, the grooves 5 are linear and may extend along curved, arched trajectories, intersecting with each other or any other extension trajectory, or may have a non-linear extension and constitute circular areas or the like.

In order to ensure adhesion between the layers 2, 3 and 4, the laminate 1 comprises at least one adhesive layer **6** placed between the surface layer 2 and the lower layer 3: preferably, the laminate panel 1 has two adhesive layers 6, one between the structural substrate 2c and the lower layer 3 and one between the additional structural substrate 4c and the lower layer 3.

The adhesive layer 6 may be a hot glue of the type used to veneer panels or a glue consisting of a sheet of thermoplastic polymer suitable to perform the gluing action by melting.

It is appropriately transparent, translucid or colourless so as not to visually superpose the lower layer 3. In particular, the adhesive layer 6 is in heat setting resins preferably formaldehyde-free such as for example polyurethane, phenolic, acrylic or melamine resins.

The adhesive layer 6 may be absent in some cases as specified below.

Lastly, the laminate 1 may provide for lighting means **7**, preferably LEDs, of a monochrome type, RGB in selectable colours or the like, suitable for positioning at the grooves 5 so as to illuminate the laminate panel 1, at least the visible portion of lower layer 3 through said grooves 5; and at least one coupling element **8** suitable to connect, preferably by snap-engaging, at least a portion of the lateral profile of the layers 2, 3 and 4, placing the lighting means 7 preferably aligned with the transparent lower layer 3.

The coupling element 8 is preferably a C profile in aluminium or the like which couples to the panel by means of a spring effect of the lateral walls closing the panel 1, preferably inserting itself in a groove made on the two visible sides of the panel. The coupling element 8 is, in addition suitable to permit the insertion of the LEDs and the heat dispersion thereof.

The invention comprises a new method of making a laminate panel and in particular, the laminate panel 1 described in a structural sense above.

The production method provides primarily, a lamination step in which a laminated panel 1 is obtained by connecting the substrates 2a, 2b and 2c to each other to make the layer 2, and to the lower layer 3 to make a laminate panel 1; and an incision step in which one or more grooves 5 are made on the layer 2 and, in addition, on the layer 4. Additionally, the lamination step provides that the substrates 4a, 4b and 4c are connected to each other to make the layer 4, and to the lower layer 3 on the side opposite the layer 2.

The lamination provides for an initial sub-step of depositing in which the adhesive layer 6 is spread over the surface layers 2 and 4 and structural substrates 2c and 4c so as to impregnate them.

At this point, the lamination step provides for an overlaying sub-step in which, the substrates/layers 2b, 2a, 2c, 6, 3, 6, 4c, 4a and 4b are overlaid in order, a heat pressure sub-step in which the layers 2, 3 and 4 are connected to each other by lamination and in particular, cross-linking of the resins and adhesive layers 6.

The layers 2, 3 and 4 are, for a period practically comprised between 20 and 80 minutes, pressed together at a pressure of 2 to 70 kg/cm² and heated to a temperature substantially comprised between 80 and 150°C.

In particular, the discreet lamination process may be at high pressure (HPL) in which the layers 2, 3 and 5 undergo a pressure of not less than 50 kg/cm² for a period practically comprised between 30 and 40 minutes at a temperature of at least 100°C; or a low pressure process in which the layers 2, 3 and 5 undergo a pressure of than 30 kg/cm², and in some cases less than 20 kg/cm².

The lamination step may also comprise the lamination of the surface layers 2 only, with one of the production cycles in themselves known, for example of HPL, and subsequent gluing of the surface layers to the lower layer 3.

The gluing is performed using known techniques and epoxy glues for example. Such techniques are used for example in chipboard and the like and are called veneering.

Alternatively the gluing of the surface layers 2 and 4 is performed by means of a so-called hot-cold cycle, in which a pressure is applied, again using a press, of between 2 and 8 kg/cm² and at a temperature which starts at ambient temperature and reaches 80°C in approximately 40-45 minutes and returns to ambient temperature in a further 40-45 minutes, again at the same pressures. When the lamination step and possible gluing step is finished, the production method provides for the incision step.

In this step the laminate 1 is subjected to machining for removing shavings, preferably by milling, wherein, one or more portions of material of equal thickness to that of the layer 2 or 4 are removed from the surface layer 2 and, appropriately, from the layer 3, thus making one or more grooves 5 suitable to make the lower layer 3 visible.

This machining is performed on a numerically controlled machine and, specifically on a numerically controlled pantograph.

The invention achieves some important advantages.

A first important advantage is that the laminate panel 1 is suitable to make the light pass exclusively through the grooves 5 making it possible to obtain decorative laminates with an elevated aesthetic effect.

In fact, by making grooves 5 of various shapes it is possible to make a figure in bas-relief or relief on the laminate and then, highlight the figure by means of the passage of light through the grooves 5.

This advantage is further increased by the possibility of connecting LEDs or other lighting means 7 which illuminate the entire transparent lower layer 3 in a diffused manner.

Another advantage is that formaldehyde -free resins are used to make the adhesive layer 6 also able to ensure a high resistance of the coupling of the layers 2, 3, 4 to water, solvents or other external agents.

Other advantages of no less importance are that the laminate 1, thanks to it adaptability, can be used in a multiplicity of applications and, thanks to the reduced weight of the materials used, is easy to transport and handle.

In particular, the mechanical characteristics of the panel, in particular when in PMMA or even in PC, are ideal, given that the core 2 is light and flexible while the surface, in particular in HPL, is hard, resistant to chemical agents and nontoxic.

In addition, the panel 1 is thermoformable, it may thus have various conformations, not only flat.

The panel 1 also makes it possible to create various colours on a single panel, each separated by the grooves 5.

Variations may be made to the invention described herein without departing from the scope of the independent claims.

## Claims

1. Panel (1) comprising a surface layer (2) defining the visible surface (1a) of said panel (1), the surface layer comprising substrates (2a, 2b, 2c); a lower layer (3) integrally constrained to said surface layer (2) on the opposite side to said visible surface (1a), comprising at least one groove (5) of said surface layer (2) suitable to make the lower layer (3) visible through said visible surface (1a); **characterised in that** said surface layer (2) is a high-pressure laminate (HPL) and **in that** said lower layer (3) is made of non-opaque polymer material.

2. Panel (1) according to claim 1, comprising a plurality of said grooves (5) defining lines with preferred extension axes (5a) substantially parallel to each other.

3. Panel (1) according to one or more of the previous claims, in which said lower layer (3) is chosen from among acrylics, polycarbonate or polystyrene.

4. Panel (1) according to one or more of the previous claims, comprising an additional surface layer (4) suitable to be constrained to said lower layer (3) on the opposite side to said surface layer (2) and defining an additional visible surface of said panel (1); and in which said at least one groove (5) is made on said additional surface layer (4) making said lower layer (3) visible through said additional visible surface (1b).

5. Panel (1) according to the previous claim, in which said grooves (5) of said surface layer (2) and of said additional surface layer (4) are substantially specular in relation to said lower layer (3).

6. Panel (1) according to one or more of the previous claims, comprising lighting means (7) suitable for positioning at said grooves (5) so as to illuminate said lower layer (3).

7. Panel (1) according to the previous claim, wherein said lighting means are LEDs.

8. Method of making a panel (1); said laminate panel comprising a lower layer (3) and a surface layer (2) comprising substrates (2a, 2b, 2c) and defining the visible surface (1a) of said panel (1); said method comprising an high-pressure lamination step (HPL) in which said substrates (2a, 2b and 2c) are integrally connected to each other to make said surface layer (2), and to said lower layer (3) to make said panel (1); comprising an incision step in which at least one groove (6) is made on said surface layer (2) making said lower layer (3) visible through said visible surface (1a); and in that said lower layer (3) is made of non-opaque polymer material.

9. Production method according to the preceding claim, in which a laminated panel (1) is obtained in said lamination step.

10. Production method according to one or more of the claims 8-9, in which in said lamination step said substrates (2a, 2b, 2c) and said lower layer (3) are pressed together for a period practically comprised between 20 and 80 minutes.

11. Production method according to one or more of the claims 8-10, in which in said lamination step said substrates (2a, 2b, 2c) and said lower layer (3) are pressed together at a pressure substantially comprised between 2 and 70 kg/cm².

12. Production method according to one or more of the claims 8-11, in which in said lamination step said substrates (2a, 2b, 2c) and said lower layer (3) are heated to a temperature substantially comprised between 80 and 150°C.

13. Production method according to one or more of the claims 8-12, in which said panel comprises an additional surface layer (4) defining an additional visible surface (1b) of said panel (1) and comprising substrates (4a, 4b, 4c); in which in said lamination step said substrates (4a, 4b and 4c) are integrally connected to each other to make said additional surface layer (4), and to said lower layer (3) on the side opposite said surface layer (2); and in which, in said incision step, said at least one groove (6) is made on said additional surface layer (4) making said lower layer (3) visible through said additional visible surface (1 b).

## Patentansprüche

1. Paneel (1), das eine die sichtbare Oberfläche (1a) des genannten Paneels (1) definierende Oberflächenschicht (2) umfasst, wobei die Oberflächenschicht (2) Grundschichten (2a, 2b, 2c) umfasst; und eine untere, von der gegenüberliegenden Seite der genannten sichtbaren Oberfläche (1a) fest mit der genannten Oberflächenschicht (2) verbundene Schicht (3), die mindestens eine Nut (5) der genannten Oberflächenschicht (2) umfasst, die geeignet ist, die genannte untere Schicht (3) über die genannte sichtbare Oberfläche (1a) sichtbar zu machen, **dadurch gekennzeichnet, dass** es sich bei der genannten Oberflächenschicht (2) um ein Hochdrucklaminat (HPL) handelt und dadurch, dass die genannte untere Schicht (3) aus nicht mattem Polymerwerkstoff besteht.

2. Paneel (1) nach Anspruch 1, umfassend eine Vielzahl der genannten Nuten (5), die Linien mit vorzugsweise zueinander parallelen Verlaufsachsen (5a) definieren.

3. Paneel (1) nach einem oder mehreren der vorangegangenen Ansprüche, bei dem die genannte untere Schicht (3) unter Acryl, Polycarbonat und Polystyrol gewählt wird.

4. Paneel (1) nach einem oder mehreren der vorangegangenen Ansprüche, umfassend eine zusätzliche Oberflächenschicht (4), die geeignet ist, mit der genannten unteren Schicht (3) von der der genannten Oberflächenschicht (2) gegenüberliegenden Seite verbunden zu werden und eine zusätzliche sichtbare Oberfläche des genannten Paneels (1) definiert; und bei dem mindestens eine Nut (5) auf der genannten zusätzlichen Oberflächenschicht (4) angebracht ist, so dass die genannte untere Schicht (3) über die genannte zusätzliche sichtbare Oberfläche (1 b) sichtbar gemacht wird.

5. Paneel (1) nach dem vorangegangenen Anspruch, bei dem die genannten Nuten (5) der genannten Oberflächenschicht (2) und der genannten zusätzlichen Oberflächenschicht (4) im Wesentlichen ein Spiegelbild der genannten unteren Schicht (3) darstellen.

6. Paneel (1) nach einer oder mehreren der vorangegangenen Ansprüche, das Beleuchtungsvorrichtungen (7) umfasst, die geeignet sind, auf den genannten Nuten (5) angeordnet zu werden, um die genannte untere Schicht (3) zu beleuchten.

7. Paneel (1) nach dem vorangegangenen Anspruch, bei dem die genannten Beleuchtungsvorrichtungen aus LEDs bestehen.

8. Verfahren zur Herstellung eines Paneels (1); wobei das genannte Laminatpaneel eine untere Schicht (3) und eine Grundschichten (2a, 2b, 2c) umfassende und die sichtbare Oberfläche (1a) des genannten Paneels (1) definierende Oberflächenschicht (2) umfasst; wobei dieses Verfahren einen Schritt der Hochdrucklaminierung (HPL) umfasst, bei dem die genannten Grundschichten (2a, 2b, 2c) zur Bildung der genannten Oberflächenschicht (2) fest miteinander und zur Bildung des genannten Paneels (1) mit der unteren Schicht (3) verbunden werden; wobei das Verfahren einen Schneidschritt umfasst, bei dem mindestens eine Nut (6) der genannten Oberflächenschicht (2) hergestellt wird, der die genannte untere Schicht (3) über die genannte sichtbare Oberfläche (1a) sichtbar macht; und dadurch, dass die genannte untere Schicht (3) aus nicht mattem Polymerwerkstoff besteht.

9. Herstellungsverfahren nach dem vorangegangenen Anspruch, bei dem bei dem genannten Laminierungsschritt ein Laminatpaneel (1) erhalten wird.

10. Herstellungsverfahren nach einem oder mehreren der Ansprüche 8-9, bei dem der genannte Schritt der Laminierung der genannten Grundschichten (2a, 2b, 2c) und der genannten unteren Schicht (3) ein gegenseitiges Zusammenpressen in einem Zeitraum zwischen 20 und 80 Minuten umfasst.

11. Herstellungsverfahren nach einem oder mehreren der Ansprüche 8-10, bei dem der genannte Schritt der Laminierung der genannten Grundschichten (2a, 2b, 2c) und der genannten unteren Schicht (3) ein gegenseitiges Zusammenpressen bei einem Druck zwischen 2 und 70 kg/cm² umfasst.

12. Herstellungsverfahren nach einem oder mehreren der Ansprüche 8-11, bei dem bei dem genannten Schritt der Laminierung die genannten Grundschichten (2a, 2b, 2c) und die genannte untere Schicht (3) bei einer im Wesentlichen zwischen 80 und 150°C liegenden Temperatur erwärmt werden.

13. Herstellungsverfahren nach einem oder mehreren der Ansprüche 8-12, bei dem das genannte Paneel eine zusätzliche Oberflächenschicht (4) umfasst, die eine zusätzliche sichtbare Schicht (1b) des genannten Paneels (1) definiert und Grundschichten (4a, 4b, 4c) umfasst; bei dem bei dem genannten Laminierungsschritt die genannten Grundschichten (4a, 4b, 4c) zur Bildung der genannten zusätzlichen Oberflächenschicht (4) fest miteinander und mit der genannten unteren Schicht (3) von der der genannten Oberflächenschicht (2) gegenüberliegenden Seite verbunden sind; und bei dem bei dem genannten Schneidschritt die genannte mindestens eine Nut (6) auf der genannten zusätzlichen Oberflächenschicht (4) angebracht wird und so die genannte untere Schicht (3) über die genannte zusätzliche sichtbare Schicht (1 b) sichtbar macht.

## Revendications

1. Panneau (1) comprenant une couche superficielle (2) définissant la surface apparente (1a) dudit panneau (1) ; la couche superficielle (2) comprenant des substrats (2a, 2b, 2c) ; une couche inférieure (3) fixée solidairement à ladite couche superficielle (2) du côté opposé à ladite surface apparente (1a), comprenant au moins une rainure (5) de ladite couche superficielle (2) apte à rendre apparente ladite couche inférieure (3) à travers ladite surface apparente (1a) **caractérisé en ce que** ladite couche superficielle (2) est un laminé à haute pression (HPL) et **en ce que** ladite couche inférieure (3) est en matière polymérique non mate.

2. Panneau (1) selon la revendication 1, comprenant une pluralité desdites rainures (5) définissant des lignes avec axes préférés de développement (5a) essentiellement parallèles entre eux.

3. Panneau (1) selon une ou plusieurs des revendications précédentes, dans lequel ladite couche inférieure (3) est choisie parmi acryliques, polycarbonates ou polystyrènes.

4. Panneau (1) selon une ou plusieurs des revendications précédentes, comprenant une couche superficielle supplémentaire (4) apte à être fixée à ladite couche inférieure (3) du côté opposé à ladite couche superficielle (2) et définissant une surface supplémentaire apparente dudit panneau (1); et dans lequel ladite au moins une rainure (5) est réalisée sur ladite couche superficielle supplémentaire (4) en rendant apparente ladite couche inférieure (3) à travers ladite surface apparente supplémentaire (1 b).

5. Panneau (1) selon la revendication précédente, dans lequel lesdites rainures (5) de ladite couche superficielle (2) et de ladite couche superficielle supplémentaire (4) sont essentiellement spéculaires par rapport à ladite couche inférieure (3).

6. Panneau (1) selon une ou plusieurs des revendications précédentes, comprenant des moyens d'éclairage (7) aptes à être placés au niveau desdites rainures (5) de façon à éclairer ladite couche inférieure (3).

7. Panneau (1) selon la revendication précédente, dans lequel lesdits moyens d'éclairage sont des DEL.

8. Procédé de fabrication d'un panneau (2) ; ledit panneau en laminé comprenant une couche inférieure (3) et une couche superficielle (2) comprenant des substrats (2a, 2b, 2c) et définissant une surface apparente (1a) dudit panneau (1) ; ledit procédé comprenant une phase de laminage à haute pression (HPL) dans laquelle lesdits substrats (2a, 2b, 2c) sont fixés solidairement entre eux, en réalisant ladite couche superficielle (2), et à ladite couche inférieure (3) en réalisant ledit panneau (1) ; comprenant une phase d'incision dans laquelle est réalisée au moins une rainure (6) de ladite couche superficielle (2) en rendant apparente ladite couche inférieure (3) à travers ladite surface apparente (1a) ; et en ce que ladite couche inférieure (3) est en matière polymérique non mate.

9. Procédé de fabrication selon la revendication précédente, dans lequel dans ladite phase de laminage on obtient un panneau (1) laminé.

10. Procédé de fabrication selon une ou plusieurs des revendications 8-9, dans lequel dans ladite phase de laminage lesdits substrats (2a, 2b, 2c) et ladite couche inférieure (3) sont réciproquement pressés pour un temps compris environ entre 20 et 80 minutes.

11. Procédé de fabrication selon une ou plusieurs des revendications 8-10, dans lequel dans ladite phase de laminage lesdits substrats (2a, 2b, 2c) et ladite couche inférieure (3) sont réciproquement pressés à une pression comprise environ entre 2 et 70 kg/cm².

12. Procédé de fabrication selon une ou plusieurs des revendications 8-11, dans lequel dans ladite phase de laminage lesdits substrats (2a, 2b, 2c) et ladite couche inférieure (3) sont chauffés à une température essentiellement comprise entre 80 et 150 °C.

13. Procédé de fabrication selon une ou plusieurs des revendications 8-12, dans lequel ledit panneau comprenant une couche superficielle supplémentaire (4) définissant une surface apparente supplémentaire (1b) dudit panneau (1) et comprenant des substrats (4a, 4b, 4c) ; dans lequel dans ladite phase de laminage lesdits substrats (4a, 4b, 4c) sont fixés solidairement entre eux, réalisant ladite couche superficielle supplémentaire (4) et à ladite couche inférieure (3) du côté opposé à ladite couche superficielle (2) et dans lequel, dans ladite phase d'incision, ladite au moins une rainure (6) est réalisée sur ladite couche superficielle supplémentaire (4) en rendant apparente ladite couche inférieure (3) à travers ladite surface apparente supplémentaire (1 b).
